# EUROPEAN PATENT APPLICATION

(11) **EP 2 778 393 A2**
(43) Date of publication of application: **17.09.2014**
(21) Application number: 14159536.3
(22) Date of filing: 13.03.2014
(51) Int. Cl.: F03D 1/06

(54) **Wind turbine blade design and associated manufacturing methods using rectangular spars**

(30) Priority: 15.03.2013 US 201313843889
(71) Applicant: Vestas Wind Systems A/S, 8200 Aarhus N (DK)
(72) Inventor: Baker, Myles L., 8200 Aarhus N (DK)
(74) Representative: Swabe, Benjamin

(57) **Abstract**

According to the present invention there is provided a wind turbine blade formed from first and second and second opposing half-shells, each half shell comprising: an outer layer; an inner layer; a core element positioned between the inner layer and the outer layer, the core element having a gap region; a spar cap positioned in the gap region of the core element, between the outer layer and the inner layer of the half shell, the spar cap including a plurality of stacked, pultruded elements, the elements being generally flat in a chordwise direction; a first core ramp positioned on a first side of the spar cap between the core element and the inner layer; a second core ramp positioned on a second side of the spar cap, opposite the first side, between the core element and the first inner layer.

## Description

### TECHNICAL FIELD

The present technology is directed generally to efficient wind turbine blades and wind turbine blade structures.

### BACKGROUND

As fossil fuels become scarcer and more expensive to extract and process, energy producers and users are becoming increasingly interested in other forms of energy. One such energy form that has recently seen a resurgence is wind energy. Wind energy is typically harvested by placing a multitude of wind turbines in geographical areas that tend to experience steady, moderate winds. Modern wind turbines typically include an electric generator connected to one or more wind-driven turbine blades, which rotate about a vertical axis or a horizontal axis.

In general, larger (e.g., longer) wind turbine blades produce energy more efficiently than do short blades. Accordingly, there is a desire in the wind turbine blade industry to make blades as long as possible. However, long blades create several challenges. For example, long blades are heavy and therefore have a significant amount of inertia, which can reduce the efficiency with which the blades produce energy, particularly at low wind conditions. In addition, long blades are difficult to manufacture and in many cases are also difficult to transport. Accordingly, a need remains for large, efficient, lightweight wind turbine blades.

### SUMMARY OF INVENTION

According to the present invention there is provided a wind turbine blade formed from first and second and second opposing half-shells, each half shell comprising: an outer layer; an inner layer; a core element positioned between the inner layer and the outer layer, the core element having a gap region; a spar cap positioned in the gap region of the core element, between the outer layer and the inner layer of the half shell, the spar cap including a plurality of stacked, pultruded elements, the elements being generally flat in a chordwise direction; a first core ramp positioned on a first side of the spar cap between the core element and the inner layer; a second core ramp positioned on a second side of the spar cap, opposite the first side, between the core element and the first inner layer.

The stacked pultruded elements are generally flat in a chordwise direction. The elements have a substantially rectangular cross section with a greater width in the chordwise direction than their thickness. By "generally flat in a chordwise direction" means that the pultruded elements are arranged so that they lie substantially flat with respect to an outer surface of the blade.

Preferably, the pultruded elements comprise a precured fiber-reinforced resin product. Preferably, the pultruded elements comprise carbon fiber embedded in a resin matrix.

The outer layer and the inner layer may comprise fiber reinforced composite laminates.

Preferably, the outer and inner layers and the core element form a sandwich panel.

Preferably the core element comprises structural foam or balsa wood.

The first and second core ramps may also comprise structural foam or balsa wood.

Preferably, the spar cap has a greater thickness than the core element.

The core ramps may have a substantially trapezoidal or triangular cross section. By "substantially" is meant that the ramp elements resemble trapeziums or triangles, but they may have rounded corners for example.

A thickness of the spar cap may be substantially the same thickness as the core element and the core ramp adjacent to the spar cap.

In another aspect of the invention, a wind turbine is provided having at least one blade as described above.

### BRIEF DESCRIPTION OF THE DRAWINGS

The invention will now be described, by way of example only, with reference to the accompanying Figures, in which:
Figure 1 is a partially schematic, isometric illustration of a wind turbine system having blades configured in accordance with an embodiment of the presently disclosed technology.
Figure 2 is a partially schematic, isometric illustration of a wind turbine blade configured in accordance with an embodiment of the presently disclosed technology.
Figure 3 is an illustration of an embodiment of the wind turbine blade shown in Figure 2, with portions of the outer skin of the blade removed and/or translucent for purposes of illustration.
Figures 4A-4B show a cross sectional view of an embodiment of the wind turbine blade in which the spars are internal to the shell structure, with Figure 4A displaying the entire blade assembly and Figure 4B showing a detailed view of the spar cap within the skin build.
Figures 5A-5D illustrate several steps in a manufacturing method for encapsulating a rectangular layered spar within an aerodynamic shell.
Figures 6A-6C illustrate several different materials that can be used as an adhesive layer between the pre-cured sections of the rectangular layered spar, in accordance with embodiments of the presently disclosed technology.
Figures 7A-7B illustrate the use of interleaved laminate layers between pre-cured spar planks to provide an increased strength connection between the spar and the shell, in accordance with embodiments of the presently disclosed technology.
Figure 8 illustrates a spar joint for a modular blade extending from a segment in which the spar is encapsulated within the aerodynamic shell, in accordance with embodiments of the presently disclosed technology.
Figure 9 illustrates a segmented shear web installation having a split line that runs along the spanwise axis of the blade, in accordance with embodiments of the presently disclosed technology.
Figure 10 shows a manufacturing method for a wind turbine blade in which two halves are completed and then mated together, in accordance with an embodiment of the present technology.
Figure 11 shows a partially schematic, isometric view of a representative transition between spar planks of one width and spar planks of another width, in accordance with an embodiment of the present technology.
Figure 12 shows a side view of a representative transition between spar planks of one width and spar planks of another width, in accordance with an embodiment of the present technology.

### DETAILED DESCRIPTION

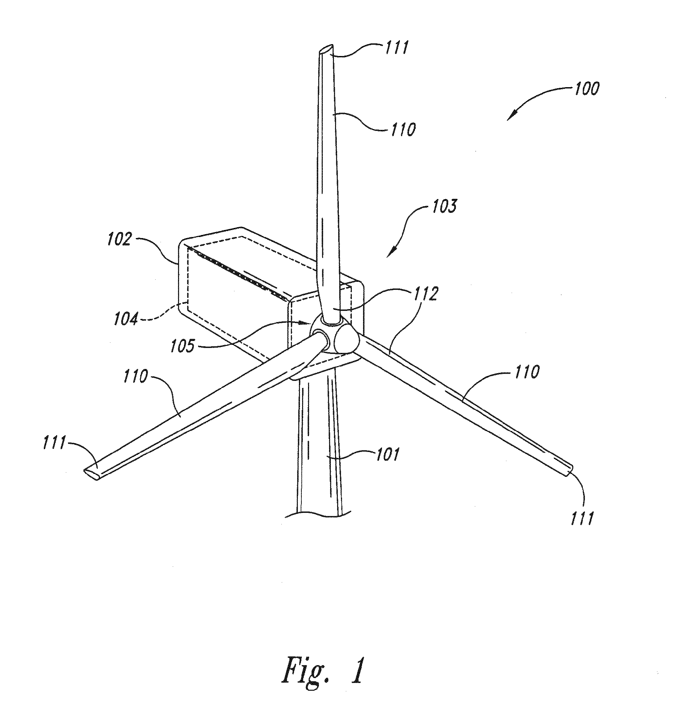

The presently disclosed technology is directed generally to efficient, wind turbine blades, and associated systems and methods for manufacture, assembly, and use. Several details describing structures and/or processes that are well-known and often associated with wind turbine blades and rotors are not set forth in the following description to avoid unnecessarily obscuring the description of the various embodiments of the technology. Moreover, although the following disclosure sets forth several representative embodiments, several other embodiments can have different configurations and/or different components than those described in this section. In particular, other embodiments may have additional elements and/or may lack one or more of the elements described below with reference to Figures 1-12. In Figures 1-12, many of the elements are not drawn to scale for purposes of clarity and/or illustration. In several instances, elements referred to individually by a reference number followed by a letter (e.g., 110a, 110b, 110c) are referred to collectively by the reference number without the letter (e.g., 110).

Figure 1 is a partially schematic, isometric illustration of an overall system 100 that includes a wind turbine 103 having blades 110 configured in accordance with an embodiment of the present technology. The wind turbine 103 includes a tower 101 (a portion of which is shown in Figure 1), a housing or nacelle 102 carried at the top of the tower 101, and a generator 104 positioned within the housing 102. The generator 104 is connected to a shaft or spindle carrying a hub 105 that projects outside the housing 102. The blades 110 each include a hub attachment portion 112 at which the blades 110 are connected to the hub 105, and a tip 111 positioned radially or longitudinally outwardly from the hub 105. In an embodiment shown in Figure 1, the wind turbine 103 includes three blades connected to a horizontally-oriented shaft. Accordingly, each blade 110 is subjected to cyclically varying loads as it rotates among the 12:00, 3:00, 6:00 and 9:00 positions, because the effect of gravity on the blade is different at each position. In other embodiments, the wind turbine 103 can include other numbers of blades connected to a horizontally-oriented shaft, or the wind turbine 103 can have a shaft with a vertical or other orientation. In any of these embodiments, the blades 110 and the hub 105 can together form a rotor 106.

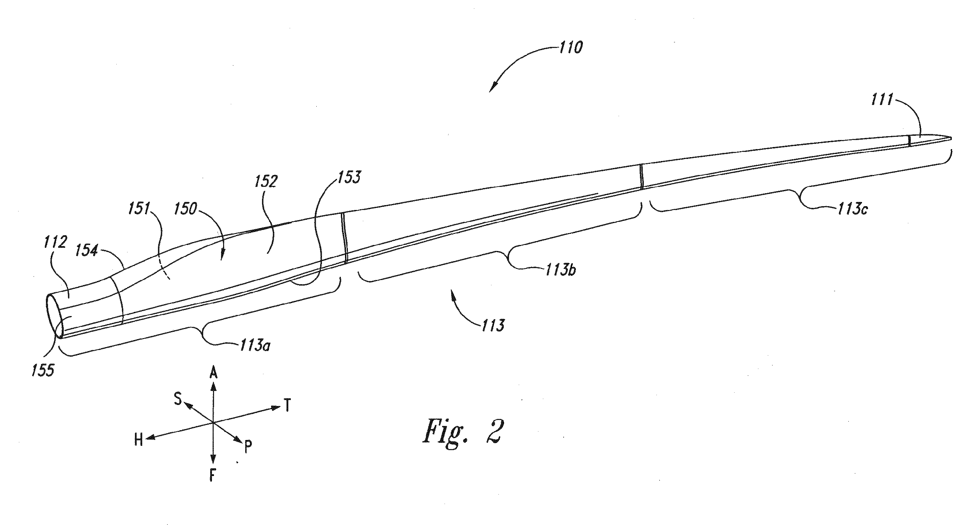

Figure 2 is partially schematic, isometric illustration of a representative one of the blades 110 described above with reference to Figure 1. The blade 110 includes multiple segments 113, for example a first segment 113a, a second segment 113b, and a third segment 113c. The segments extend along a spanwise, longitudinal, or axial axis from the hub attachment portion 112 to the tip portion 111. The spanwise axis is represented in Figure 2 as extending in hub direction H and tip direction T. The blade 110 also extends along a thickness axis in pressure direction P and a suction direction S, and further extends along a chordwise axis in a forward direction F and an aft direction A. The outer surface of the blade 110 is formed by a skin or shell 150 that can include several skin or shell sections. These sections can include a suction side skin or shell 151, a pressure side skin or shell 152, and a trailing edge skin or shell 154. The internal structure of the blade 110, the connections between the internal structure and the skin/shell 150, and the connections between neighboring segments 113 are described further below.

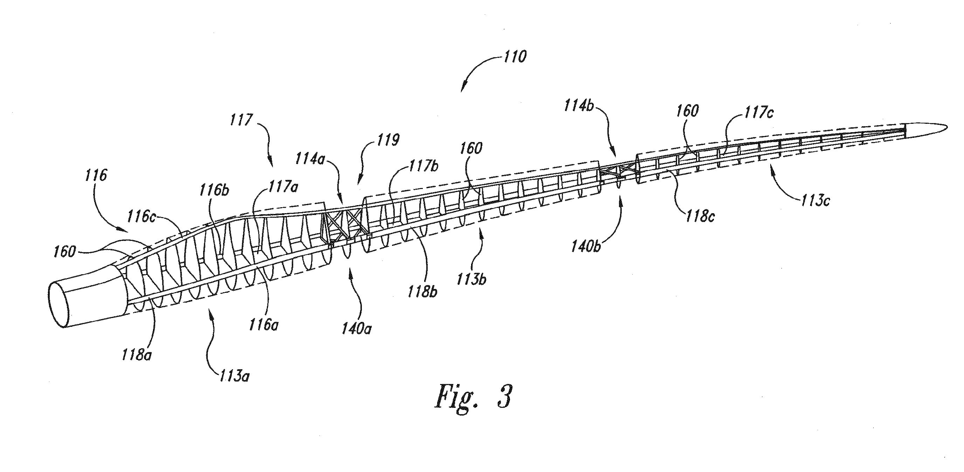

Figure 3 illustrates the blade 110 with portions of the skin removed or translucent for purposes of illustration. In this embodiment, the blade 110 includes multiple ribs 160 located at each of the segments 113a, 113b, and 113c. The ribs 160 are connected to three spars 116 (shown as first spar 116a, second spar 116b, and a third spar 116c) that extend along the length of the blade 110. Accordingly, each of the spars 116 includes a first portion 118a at the first segment 113a, a second spar portion 118b at the second segment 113b, and a third spar portion 118c at the third segment 113c. Each segment 113 also includes a corresponding shear web 117, illustrated as a first shear web 117a, a second shear web 117b, and a third shear web 117c. Each segment 113 may also contain an aft shear web 119 to connect the third spar, 116c, to the shell, illustrated as a first aft shear web 119a, a second aft shear web 119b, and a third aft shear web 119c. The spar portions 118 in neighboring sections 113 are connected at two connection regions 114a, 114b to transmit loads from one segment 113 to the next. The shear webs 117 are not continuous across the connection regions 114. Instead, truss structures 140 (shown as first structure 140a and second truss structure 140b) at each connection 114 are connected between neighboring segments 113 to transmit shear loads from one segment 113 to the next. In other embodiments, the ribs 160 can be omitted, and/or the blade 110 can have a different number or arrangement of spars 116, and/or the truss structure 140 can be omitted, and/or the shear webs 117 can be continuous across the connection region 114. The blade may also be a once piece blade, i.e. not of a modular construction.

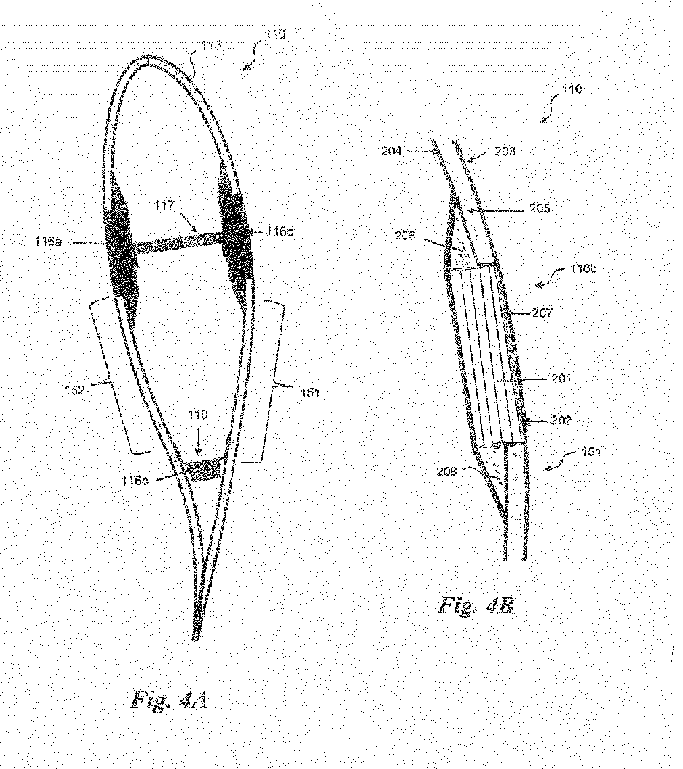

Figure 4A illustrates a cross sectional view of a representative segment 113 of the blade 110 configured in accordance with an embodiment of the present technology. The first and second spars, 116a and 116b, are shown as layers of pre-cured elements which are encapsulated within the aerodynamic shells 151 and 152. The first and second spars 116a, 116b are connected through the thickness direction by the shear web 117. This embodiment illustrates the third spar 116c as a pre-cured spar connected to the suction side skin 151 and the pressure side skin 152 through the aft shear web 119, though in other embodiments, the third spar 116c can have other arrangements. For clarity, the spars 116 have been shown as rectangular elements, but the spars 116 can have other shapes in other embodiments. In general, the spars 116 are made up of a single stack of flat, pre-cured elements, with each element having the same chordwise width in some embodiments and different widths in other embodiments.

Figure 4B shows a detailed diagram of the second spar 116b and the suction shell 151. The component configuration is similar to that of the first spar 116a and the pressure side shell 152. In this embodiment, the shell 151 includes an outer face sheet 203, e.g., formed from a number of laminate plies along the exterior face of the aerodynamic shell. The shell 151 further includes an inner face sheet 204, e.g., formed from a number of laminate plies along the interior face of the aerodynamic shell, and a core body or layer 205 between the two face sheets 203, 204. In a typical embodiment, the face sheets 203, 204 are fiber reinforced composite laminates (e.g. fiberglass) and the core 205 is a low density material such as balsa wood or foam, though in other embodiments, these components can be formed from other materials. The core 205 and the face sheets 203, 204 form a sandwich panel construction.

The first and second spars 116a and 116b are formed from layers of pre-cured laminate planks 201 that are flat in one direction (e.g., a generally chordwise direction), and are bonded with adhesive layers 202. In a particular embodiment, the layers forming individual planks 201 are constructed of pultruded fiberglass or carbon fiber, and in other embodiments they can be made of other composites using other fibers with different resins (e.g. epoxy, polyester and/or others).

In a particular embodiment, the second spar 116b is encapsulated between the face sheets 203 and 204 in place of the core layer 205 at that location. To fit the rectangular second spar 116b against the curved aerodynamic shell 151, a filler component 207 may be placed between the second spar 116b and the internal surface of the suction side shell 151. The filler component 207 can be or include a non-structural material such as foam or pure polymer, but may in other embodiments be a structural material such as a fiber-reinforced composite in order to add to the structural performance of the blade 110.

To eliminate a sharp bend in the inner face sheet 204 when the second spar 116b and the core 205 do not have the same thickness, ramp elements 206 may be added to the core 205 adjacent to the spar 116b. The ramp elements 206 may be manufactured from low cost, lightweight materials. In other embodiments, the plies of the face sheets 203 and 204 may follow paths different than those shown in Figure 4B. For example the inner face sheets 204 can go around the outside of the second spar 116b such that in the area over the second spar 116b, the inner face sheet 204 is near the outer surface of the shell 151. In another embodiment, some plies of the outer face sheet 203 wrap around the inside of the second spar 116b, or some plies of the face sheets 203 and 204 follow paths through intermediate bondlines inside the second spar 116b. The selection of which configuration is suitable for a given application can be made based on criteria such as stress, manufacturing, and/or reliability. As can be seen the ramp elements are substantially triangular in cross section. In other example, the core ramps could have a substantially trapezoidal cross section. By "substantially" is meant the ramp elements resemble trapeziums or triangles, but they may have rounded corners for example.

To eliminate the sharp bend in the inner face sheet 204 when the second spar 116b and the core 205 do not have the same thickness, the thickness of the spar cap 116b is approximately equal to the thickness of the core 205 and the ramp element 206 adjacent to the spar.

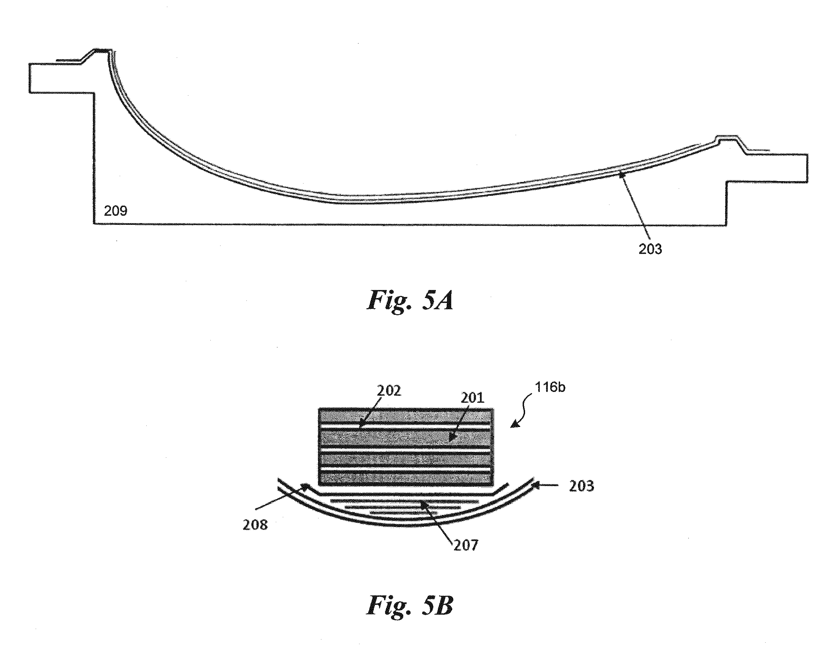

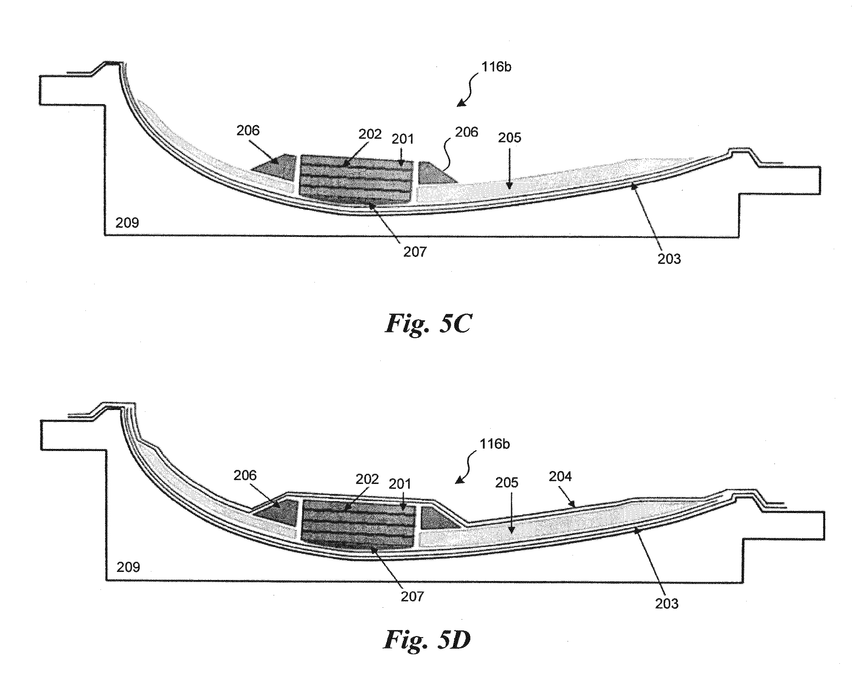

Figures 5A-5D illustrate a representative manufacturing method for encapsulating the rectangular layered second spar 116b within the aerodynamic suction side shell 151. The pressure side shell 152 and first spar 116a can be made in accordance with a similar manufacturing method. In Figure 5A, the outer face sheet laminate plies 203 are first laid up against a female mold 209. Figure 5B shows a detailed view of the spar landing region. In this embodiment, the filler component 207 is constructed of a multitude of laminate plies cut to varying widths to fill the gap between the outer face sheet 203 and the layered spar assembly of planks 201 and adhesive layers 202. By making the filler component 207 from a unidirectional laminate, with the fiber direction oriented along the spanwise axis of the blade, the manufacturer can increase the bending stiffness of the blade 110. In this embodiment, a fiber mat layer 208 is placed between the spar assembly 116b and the filler plies 207 to promote resin flow through the region. In other embodiments, this gap may be filled with other materials such as adhesive or resin, or a pre-cured component shaped such that it fits inside the available space. In other examples, the filler component 207 may not be included. Figure 5C illustrates the placement of the core layer 205, and the core ramps 206 around the spar assembly 116b against the outer face sheet 203. Figure 5D illustrates a process for completing the layup with the addition of the inner face sheet 204. The layup diagrams described in Figures 5A-5D can be used with any suitable layup manufacturing method including the use of pre-preg laminates, wet layup, and infusion. Furthermore, variations in the sequence of operations may be made in order to produce the variations in configuration described in the preceding paragraph.

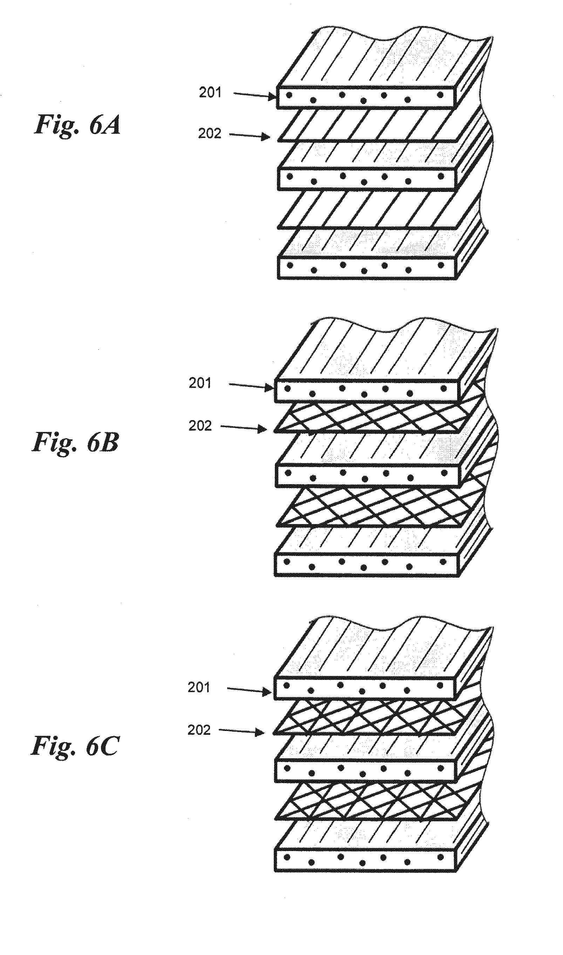

Figures 6A-6C illustrate configurations in accordance with further embodiments for bonding the pre-cured layers 201 together into a spar, using different types of fiber-reinforced layers to function as the adhesive layers 202 between the pre-cured plank layers 201. In some embodiments, a pure adhesive is used, and in others, any of the fiber-reinforced materials 202 shown in Figures 6A-6C are used. Pre-preg, wet layup, infusion, and/or other suitable methods can be used to make suitable fiber-reinforced materials 202. The spar assembly of pre-cured planks 201 and laminate adhesive layers 202 can be cured as a sub-assembly and then used in full blade assemblies, or the adhesive layers 202 can be co-cured with the shells if the spars are encapsulated as shown in Figure 4A-5D.

Three representative embodiments for forming representative spar assemblies are shown in Figures 6A-6C. In Figure 6A, the adhesive layers 202 are made of a unidirectional laminate, having a fiber alignment that runs along the spanwise axis of the blade. The use of a unidirectional laminate as the adhesive layer can significantly increase the axial stiffness and strength of the resulting spar assembly. In Figure 6B, the adhesive layers 202 are made of a biaxial laminate which can significantly increase the shear load capability of the spar assembly. Figure 6C shows a triaxial laminate used for the adhesive layers 202, which combines the benefits of both the unidirectional and biaxial laminates. This method can be used on any suitable size and number of planks for a spar assembly, though only three planks are shown in Figures 6A-6C for purposes of illustration. In another example, the adhesive layer may be formed from resin that is used in a VARTM infusion process to impregnate the dry materials in the blade mold.

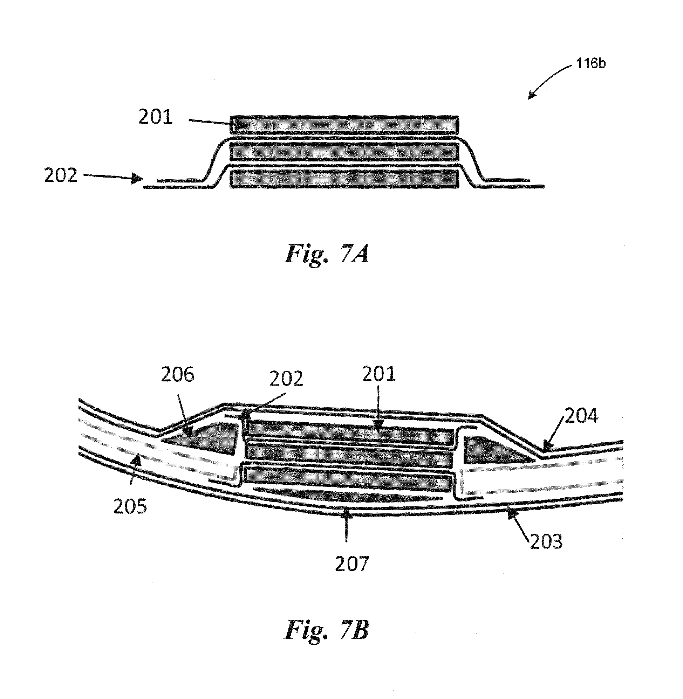

Figures 7A-7B illustrate techniques for positioning laminates (used as the adhesive layers 202) between pre-cured spar planks to increase the bond area of the spar assembly. In this embodiment, Figure 7A is a cross sectional view of a representative second spar 116b. The laminate adhesive layers 202, extend beyond the width of the planks 201. In Figure 7A, all the laminate layers 202 are gathered on one side or opposing sides of the spar assembly to create a flange. This flange can increase the bond area if the spar assembly is bonded to a finished skin shell, or if the spar is encapsulated within the shell as shown in Figures 4A-4B. Figure 7B illustrates another embodiment in which some of the laminate layers 202 pass along or adjacent to the outer face sheet 203, and the remainder pass along or adjacent to the inner face sheet 204. The extended plies also aid in reinforcing the skin shell locally where extra strength may be beneficial for transferring loads to and from the spar. Only three planks are shown in Figures 7A-7B to simplify the illustrations but these methods can be used for embodiments of any suitable spar size and/or plank count.

In a similar manner, fiber-reinforced adhesive layers 202 may extend past the ends of the precured planks 201 in the longitudinal direction, e.g. toward the blade tip or toward the hub, into and out of the plane of Figures 7A and 7B. The plies can be used as one or more transition elements from the spars to the hub attachment or root region 112 (Figure 2). The plies can also be utilized in the extreme outboard section of the blade 110 to transition from a layered plank spar to a traditional spar layup.

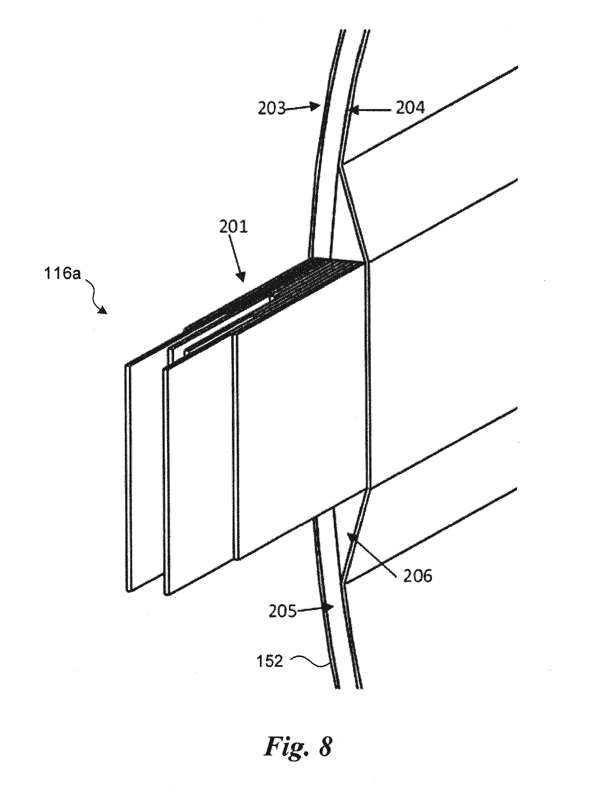

Figure 8 illustrates a representative manner in which a layered spar encapsulated within the aerodynamic shell can be used in a modular wind turbine blade. In particular, Figure 8 illustrates a portion of the first spar 116a shown in Figure 4A at a joint region of the overall blade 110 (e.g., the first joint region 114a shown in Figure 3). The precured planks 201 that form the first spar 116a extend longitudinally past the end of the pressure side shell 152. The planks terminate at varying longitudinal locations creating a pattern of projections and recesses. These will align with corresponding recesses and projections, respectively, from the plank termination points of and adjacent spar in the spanwise adjoining section to form a finger lap joint which can be bonded by applying an adhesive. Suitable techniques for forming such joints are included in U.S. Patent Publication No. US2012/0082555. The foregoing arrangement can provide a high strength joint between the spars located in different spanwise sections of the blade. Additional structure may be used or required to carry shear and torsion loads, such as a truss structure or an additional shear web and associated skin panels.

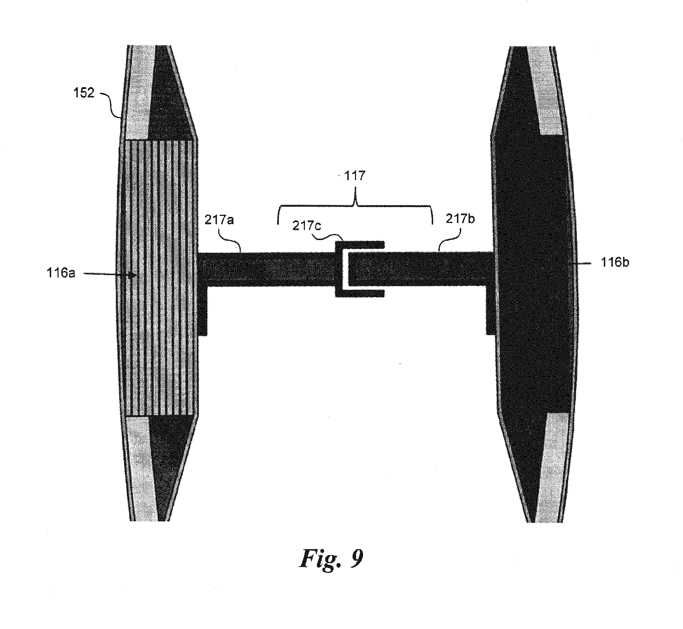

Figure 9 is an illustration of the shear web 117 configured as a segmented assembly. In this embodiment, the shear web 117 is connected between the first spar 116a and the second spar 116b e.g., at the centers of the spars. The same technique can be used to join shear webs 117 to spars at other positions, including but not limited to (a) the forward edges of the first and second spars, (b) the aft edges of the first and second spars, (c) between the pressure and suction skins 152, 151, but not contacting a spar, and/or (d) any combination of multiple shear webs. The shear web 117 can include a pressure side element 217a, a suction side element 217b, and a connector element 217c. The split line between the pressure side element 217a and the suction side element 217b runs in a spanwise direction along the blade 110. The connector element 217c can allow for alignment and/or adjustment between the suction side element 217a and the pressure side element 217b in the three blade axes, e.g., spanwise axis, thickness axis, and chordwise axis.

In a particular embodiment, the connector element 217c has a socket type configuration, as illustrated in Figure 9. For example, the connector element 217c can include a female element that directly receives the end of the suction side element 217b, or that receives a corresponding male component carried by the suction side element 217b. Connections in accordance with other suitable embodiments include but are not limited to (a) a double lap shear configuration with bridging elements carried by both the shear elements 217a, 217b, (b) a single lap shear configuration with a bridging element on one side or directly bonding the two web elements 217a, 217b together, and/or (c) a double-socket "H" style joint. The connector element 217c can be constructed as a co-cured extension of either the pressure side element 217a or the suction side element 217b, or it can be a separate part formed from any suitable material and then bonded to both web elements 217a, 217b.

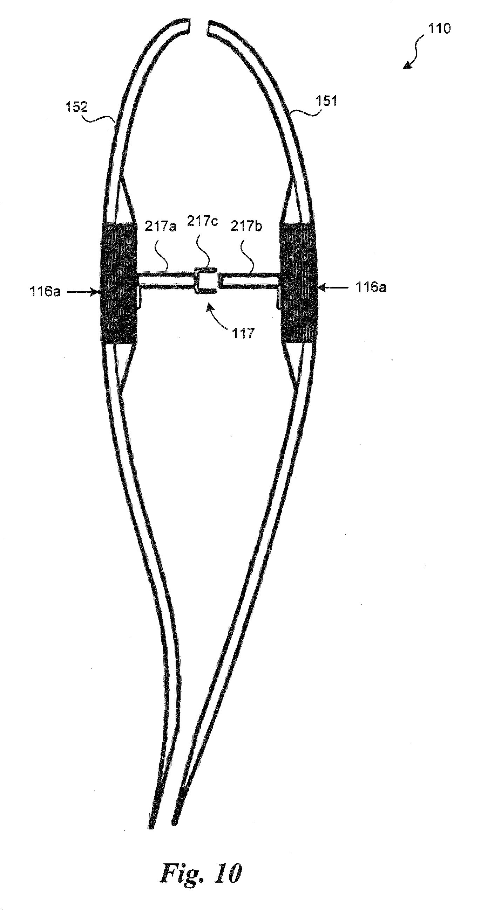

Figure 10 illustrates a technique for manufacturing a blade 110 in accordance with a particular embodiment of the present technology. In this embodiment, the pressure and suction halves of the blade are completed to include spars and shear web segments and are then joined together to complete the blade. As shown, the first or pressure-side spar 116a is encapsulated within the pressure side skin 152, and the second or suction-side spar 116b is encapsulated within the suction side skin 151. The shear web 117 is initially segmented along the spanwise direction of the blade and so includes the pressure side element 217a, the suction side element 217b, and the connector element 217c. In some embodiments, an additional spar may be used at the leading and/or trailing edges of the blade 110 for increased edgewise stiffness, but these are not shown in Figure 10 for purposes of clarity. During assembly, the two halves (or other fractional portions) are brought together and bonded.

In some embodiments, it may be advantageous to use different widths of pre-cured planks in the spars of different portions of the blade, or to use pre-cured planks in one part of the blade, and other structures (e.g. infused or prepreg structures) in another part of the blade.

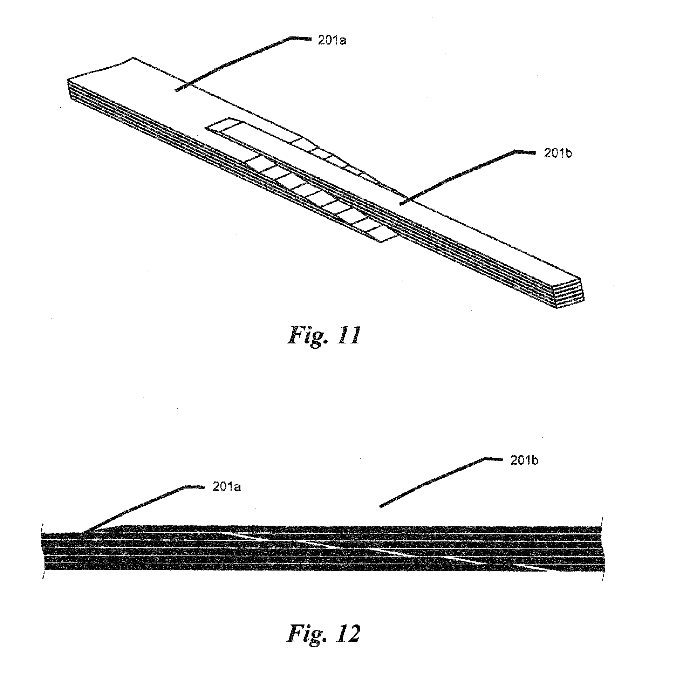

Accordingly, embodiments of the present technology can include a structurally efficient transition between different parts of the spar. Figure 11 and Figure 12 show a transition in accordance with one such embodiment. Figure 11 illustrates a transition in which the inboard portion of the spar is made of first planks 201 a, and the outboard portion of the spar is made of second planks 201 b with the first planks 201 a being wider (e.g., in a chordwise direction) than the second planks 201 b. Individual first planks 201 a are butted to a corresponding second plank 201 b. Additional narrow planks may be added on top of the spar cap as necessary to maintain selected levels of stiffness and strength across the transition area. The ends of the planks may have tapers or other arrangements for reducing stress concentrations at each individual layer. In other embodiments, some or all of the first planks 201a may be formed from materials different than those used to form the second planks 201 b e.g., pre-cured composites with different fibers or resins, or composites fabricated in other ways (e.g. infusion, prepreg) without being pre-cured prior to assembly. Figure 12 shows a side view of this transition region with the thickness direction exaggerated for clarity.

From the foregoing, it will be appreciated that specific embodiments of the present technology have been described herein for purposes of illustration, but that various modifications may be made without deviating from the technology. Further, while advantages associated with certain embodiments of the technology have been described in the context of those embodiments, other embodiments may also exhibit such advantages, and not all embodiments need necessarily exhibit such advantages to fall within the scope of the present technology. Accordingly, the present disclosure and associated technology can encompass other embodiments not expressly shown or described herein.

## Claims

1. A wind turbine blade formed from first and second and second opposing half-shells, each half shell comprising:
an outer layer (203);
an inner layer (204);
a core element (205) positioned between the inner layer (204) and the outer layer (203), the core element having a gap region;
a spar cap (116) positioned in the gap region of the core element (205), between the outer layer (203) and the inner layer (204) of the half shell, the spar cap including a plurality of stacked, pultruded elements (201), the elements being generally flat in a chordwise direction;
a first core ramp (206) positioned on a first side of the spar cap (116) between the core element (205) and the inner layer (204);
a second core ramp (206) positioned on a second side of the spar cap (116), opposite the first side, between the core element (205) and the first inner layer (204).

2. A wind turbine blade according to claim 1, wherein the pultruded elements (201) comprise a precured fiber-reinforced resin product.

3. A wind turbine blade according to claim 2, wherein the pultruded elements (201) comprise carbon fiber embedded in a resin matrix.

4. A wind turbine blade according to any one of the preceding claims, wherein the outer layer (203) and the inner layer (204) comprise fiber reinforced composite laminates.

5. A wind turbine blade according to any one of the preceding claims, wherein the outer layer (203), the inner layer (204) and the core element (205) form a sandwich panel.

6. A wind turbine blade according to any one of the preceding claims, wherein the core element (205) comprises structural foam or balsa wood.

7. A wind turbine blade according to claim 6, wherein the first and second core ramps (206) comprise structural foam or balsa wood.

8. A wind turbine blade according to any one of the preceding claims, wherein the spar cap (116) has a greater thickness than the core element (205).

9. A wind turbine blade according to any one of the preceding claims, wherein the core ramps (206) have a substantially trapezoidal or triangular cross section.

10. A wind turbine blade according to claim 9, wherein a thickness of the spar cap (116) is substantially the same thickness as the core element (205) and the core ramp (206) adjacent to the spar cap.

11. A wind turbine having at least one blade according to any one of the preceding claims.
